(19) Europäisches Patentamt
European Patent Office
Office européen des brevets

(11) **EP 3 262 948 A1**

(12) **EUROPEAN PATENT APPLICATION**
published in accordance with Art. 153(4) EPC

(43) Date of publication:
**03.01.2018 Bulletin 2018/01**

(51) Int Cl.:
***A23D 9/00*** *(2006.01)* ***A23G 1/00*** *(2006.01)*
***A23G 1/30*** *(2006.01)*

(21) Application number: **16755550.7**

(22) Date of filing: **24.02.2016**

(86) International application number:
**PCT/JP2016/055420**

(87) International publication number:
**WO 2016/136806 (01.09.2016 Gazette 2016/35)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **26.02.2015 JP 2015035955**

(71) Applicant: **The Nisshin OilliO Group, Ltd.**
**Tokyo 104-8285 (JP)**

(72) Inventors:
• **OONISHI Kiyomi**
**Yokosuka-shi**
**Kanagawa 239-0832 (JP)**

• **AIBARA Tomohiro**
**Yokosuka-shi**
**Kanagawa 239-0832 (JP)**
• **TSUKIYAMA Muneo**
**Yokosuka-shi**
**Kanagawa 239-0832 (JP)**
• **TAKEGUCHI Seiya**
**Yokosuka-shi**
**Kanagawa 239-0832 (JP)**
• **UEHARA Hidetaka**
**Yokosuka-shi**
**Kanagawa 239-0832 (JP)**

(74) Representative: **Müller-Boré & Partner**
**Patentanwälte PartG mbB**
**Friedenheimer Brücke 21**
**80639 München (DE)**

(54) **POWDERED FAT COMPOSITION FOR CHOCOLATE**

(57) An obj ect of the present invention is to provide a powdered fat and/or oil composition for chocolate, which is capable of imparting a light air-in-like mouthfeel and a good melt-in-the-mouth only by cooling and solidification without using dedicated equipment. The present invention is a powdered fat and/or oil composition for chocolate, containing a fat and/or oil composition in a powder form satisfying the following condition (a). (a) The fat and/or oil composition contains: 65 to 99% by mass of a XXX triglyceride having fatty acid residues X, each with x carbon atoms, at positions 1 to 3; and 35 to 1% by mass of one or more types of X2Y triglycerides each having a fatty acid residue Y with y carbon atoms in place of one of the fatty acid residues X of the XXX triglyceride, provided that a total triglyceride content is 100% by mass, where x number of carbon atoms is an integer selected from 8 to 20, and y number of carbon atoms is each independently an integer selected from x+2 to x+12 and satisfying y≤22.

**EP 3 262 948 A1**

**Description**

Technical Field

The present invention relates to a powdered fat and/or oil composition for chocolate, which is capable of imparting a light air-in-like mouthfeel and a good melt-in-the-mouth only by cooling and solidification without using dedicated equipment. Moreover, the present invention also relates to a method for easily producing an air-in-like chocolate by using such a powdered fat and/or oil composition as described above.

Background Art

Chocolates are produced from cacao mass, saccharides, milks, and so forth, and are popular foods among a wide range of people including children and adults. Recently, the diversification of the preferences of consumers has led to the developments of chocolates having various mouthfeels and flavors. Among these, aerated chocolate having a light mouthfeel and a good melt-in-the-mouth is especially highly preferable and has become popular among consumers. However, in order to impart a light mouthfeel and a good melt-in-the-mouth, it is necessary to incorporate and stabilize gas bubbles in a molten, liquid chocolate by controlling the pressure or stirring at high speed. This requires dedicated equipment for the pressure control and the high-speed stirring, and also requires the operator to have a highly dedicated skill. Hence, there have been demands for the development of a method for easily producing an aerated chocolate.

In order to incorporate and stabilize gas bubbles in a chocolate, it is necessary to cool the chocolate and partially crystallize the fat and/or oil contained therein. However, if the crystal growth proceeds excessively, the chocolate itself loses the flowability. For this reason, when an aerated chocolate is produced, an edible emulsifier is often added to the chocolate as a conventional technique. For example, there is known a method for producing an aerated chocolate containing mono-fatty acid di-organic acid glycerin and/or di-fatty acid mono-organic acid glycerin as an emulsifier(s) (Patent Literature 1). Moreover, there is known a method for producing an aerated chocolate containing a triglycerin fatty acid ester having a monoester content of 50% by mass or more and a glycerin mono-fatty acid ester (Patent Literature 2).

However, the use of an edible emulsifier as described above adversely influences the flavor. For this reason, without using an edible emulsifier, an aerated chocolate is often produced also by adjusting the properties of the fat and/or oil contained in the aerated chocolate. For example, there is known a method for producing an aerated chocolate by using a fat and/or oil composition having an S3 triacylglycerol content of 0.5 to 10% by mass, a PU2 triacylglycerol content of 15 to 45% by mass, and a U3 triacylglycerol content of 10 to 55% by mass in the total triacylglycerol (Patent Literature 3). There is also known a method for producing an aerated chocolate by using a chocolate containing a fat and/or oil whose solid fat content at 20 to 30°C is 12 to 42% (Patent Literature 4).

However, in all of these conventional production methods, the step of incorporating gas bubbles into the chocolate is essential, requiring the dedicated equipment and the operator having a dedicated skill. Thus, there have not been known so far such a production method as in the present invention that a light air-in-like mouthfeel and a good melt-in-the-mouth are imparted to a chocolate only by cooling and solidification without using dedicated equipment.

Citation List

Patent Literatures

Patent Literature 1: Japanese Patent Application Publication No. 2005-73610
Patent Literature 2: Japanese Patent Application Publication No. 2007-236289
Patent Literature 3: Japanese Patent Application Publication No. 2012-249617
Patent Literature 4: Japanese Patent Application Publication No. 2014-124093

Summary of Invention

Technical Problem

An object of the present invention is to provide a powdered fat and/or oil composition for chocolate, which is capable of imparting a light air-in-like mouthfeel and a good melt-in-the-mouth only by cooling and solidification without using dedicated equipment.

Solution to Problem

The present inventors have conducted intensive study on a method for producing a chocolate having a light air-in-like mouthfeel and a good melt-in-the-mouth. As a result, the inventors have surprisingly found that a light air-in-like mouthfeel and a good melt-in-the-mouth are obtained without using dedicated equipment but by blending a powdered fat and/or oil composition which satisfies a specific condition as a raw material of a chocolate. This finding has led to the completion of the present invention.

Specifically, one aspect of the present invention makes it possible to provide a powdered fat and/or oil composition for chocolate, comprising a fat and/or oil composition in a powder form satisfying the following condition (a), wherein

(a) the fat and/or oil composition comprises:

65 to 99% by mass of a XXX triglyceride having fatty acid residues X, each with x carbon atoms, at positions 1 to 3; and
35 to 1% by mass of one or more types of X2Y triglycerides each having a fatty acid residue Y with y carbon atoms in place of one of the fatty acid residues X of the XXX triglyceride, provided that a total triglyceride content is 100% by mass,

x number of carbon atoms is an integer selected from 8 to 20, and
y number of carbon atoms is each independently an integer selected from x+2 to x+12 and satisfying y≤22.

Moreover, a preferable aspect of the present invention makes it possible to provide the powdered fat and/or oil composition comprising:

80 to 99% by mass of the XXX triglyceride; and
20 to 1% by mass of the one or more types of X2Y triglycerides in total.

Moreover, a preferable aspect of the present invention makes it possible to provide the powdered fat and/or oil composition, wherein
the x is an integer selected from 10 to 18, and
the y is each independently an integer selected from x+2 to x+10 and satisfying y≤22.

Moreover, a preferable aspect of the present invention makes it possible to provide the powdered fat and/or oil composition, wherein
the x is an integer selected from 10 to 12, and
the y is each independently an integer selected from x+4 to x+8 and satisfying y≤22.

Moreover, a preferable aspect of the present invention makes it possible to provide the powdered fat and/or oil composition, which has a loose bulk density of 0.1 to 0.6 g/cm$^3$.

Further, one aspect of the present invention makes it possible to provide a chocolate comprising the powdered fat and/or oil composition.

Moreover, a preferable aspect of the present invention makes it possible to provide the chocolate comprising the powdered fat and/or oil composition and cocoa butter at a mass ratio of 40:60 to 99:1, more preferably 45:55 to 97:3, and furthermore preferably 50:50 to 95:5.

Furthermore, one aspect of the present invention makes it possible to provide a method for producing a chocolate, comprising blending the powdered fat and/or oil composition.

Moreover, a preferable aspect of the present invention makes it possible to provide the method for producing a chocolate, comprising blending the powdered fat and/or oil composition and cocoa butter at a mass ratio of 40:60 to 99:1, more preferably 45 : 55 to 97 : 3 , and furthermore preferably 50:50 to 95:5.

Furthermore, one aspect of the present invention makes it possible to provide a chocolate quality improver comprising the powdered fat and/or oil composition as an active ingredient.

In addition, one aspect of the present invention makes it possible to provide a fat and/or oil composition for chocolate, comprising a fat and/or oil composition in a molten state satisfying the following condition (a), wherein

(a) the fat and/or oil composition comprises:

65 to 99% by mass of a XXX triglyceride having fatty acid residues X, each with x carbon atoms, at positions 1 to 3; and
35 to 1% by mass of one or more types of X2Y triglycerides each having a fatty acid residue Y with y carbon atoms in place of one of the fatty acid residues X of the XXX triglyceride, provided that a total triglyceride content is 100% by mass,

x number of carbon atoms is an integer selected from 8 to 20, and
y number of carbon atoms is each inceependly an integer selected from x+2 to x+12 and satisfying y≤22.

Advantageous Effects of Invention

The present invention enables anyone to easily produce a chocolate having a light air-in-like mouthfeel and a good melt-in-the-mouth by using a powdered fat and/or oil composition which satisfies a specific condition. Further, required are since only cooling and solidification without the use of dedicated equipment, the production cost can be greatly reduced. Moreover, an emulsifier is not essential for the chocolate of the present invention, so that the adverse influence on the flavor is little. In addition, the chocolate of the present invention has a cooling sensation, which makes it highly preferable, and can meet the demand of those who cannot be satisfied by conventional chocolates.

Description of Embodiments

Hereinafter, a chocolate of the present invention will be described one by one.

<Chocolate>

In the present invention, a "chocolate" is not limited to those specified in "Fair Competition Code concerning Labeling for Chocolates (Japan Fair Trade Commission Notification No. 16 of S46.3.29 (March 29, 1971), amended Notification No. 18 of H2.6.22 (June 22, 1990))" (Japan Chocolate Industry Fair Trade Conference) or in regulations, and is not particularly limited, as long as it is produced by adding, as necessary, a dairy product, a flavoring, an emulsifier, or the like to main raw materials including cacao mass, a cocoa powder, edible fat and/or oil (such as cocoa butter, vegetable fat and/or oil), and a saccharide (such as sugar, lactose, maltose, fructose) and through chocolate production steps (such as a mixing step, a refining step, a conching step, a cooling step). Examples of the "chocolate" of the present invention also include a white chocolate and a color chocolate which use no cacao mass, in addition to a dark chocolate, a black chocolate, and a milk chocolate.

The "chocolate" obtained according to the present invention is preferably an air-in-like chocolate (aerated chocolate). In the present invention, an "air-in-like chocolate" means a chocolate having a light mouthfeel and a good melt-in-the-mouth resembling what is called an aerated chocolate, although the "air-in-like chocolate" is produced only by cooling and solidification without introducing air into the chocolate itself.

<Fat and/or Oil Composition>

The present invention relates to a fat and/or oil composition containing: 65 to 99% by mass of at least one type of a XXX triglyceride having fatty acid residues X, each with x carbon atoms, at positions 1 to 3; and 35 to 1% by mass of one or more types of X2Y triglycerides each having a fatty acid residue Y with y carbon atoms in place of one of the fatty acid residues X of the XXX triglyceride, provided that a total triglyceride content is 100% by mass. In the fat and/or oil composition, x number of carbon atoms is an integer selected from 8 to 20, and y number of carbon atoms is each inceependntly an integer selected from x+2 to x+12 and selected from a condition satisfying y≤22. The fat and/or oil composition containing the two types of the triglycerides in the above-described % by mass easily forms a fat and/or oil composition in a powder form without incorporating an additive such as an emulsifier or an excipient. The fat and/or oil composition and the powdered fat and/or oil composition of the present invention have been described in detail in PCT/JP2015/070850 (Japanese Patent Application No. 2014-149168) already filed. Accordingly, the detail will be omitted here. Note that the content of this application is incorporated herein. Hereinafter, characteristics of the fat and/or oil composition and the powdered fat and/or oil composition of the present invention will be summarized and described.

<XXX Triglyceride>

The fat and/or oil composition of the present invention contains a single type or multiple types, preferably a single type (one type), of the XXX triglyceride whose content is 65 to 99% by mass provided that a total triglyceride content is 100% by mass. The XXX triglyceride is a triglyceride having fatty acid residues X, each with x carbon atoms, at positions 1 to 3, and each of the fatty acid residues X is the same as the others. Herein, x number of carbon atoms is an integer selected from 8 to 20, preferably an integer selected from 10 to 18, more preferably an integer selected from 10 to 16, and furthermore preferably an integer selected from 10 to 12.

The fatty acid residues X may be saturated or unsaturated fatty acid residues. Specific examples of the fatty acid residues X include residues such as caprylic acid, capric acid, lauric acid, myristic acid, palmitic acid, stearic acid, and arachidic acid, but are not limited thereto. The fatty acids are more preferably capric acid, lauric acid, myristic acid, palmitic acid, and stearic acid, furthermore preferably capric acid, lauric acid, myristic acid, and palmitic acid, and still furthermore preferably capric acid and lauric acid.

The content of the XXX triglyceride is 65 to 99% by mass relative to 100% by mass of all triglycerides in the fat and/or oil composition. The content of the XXX triglyceride is preferably 75 to 99% by mass, more preferably 80 to 99% by mass, furthermore preferably 83 to 98% by mass, particularly preferably 85 to 98% by mass, and still furthermore preferably 90 to 98% by mass.

<X2Y Triglyceride>

The fat and/or oil composition of the present invention contains one or more types of the X2Y triglycerides each having a fatty acid residue Y with y carbon atoms in place of one of the fatty acid residues X of the XXX triglyceride. Herein, each of the fatty acid residues X contained in one X2Y triglyceride is the same as the other, and is also the same as the fatty acid residues X of the XXX triglyceride. The y number of carbon atoms of the fatty acid residue Y contained in the one X2Y triglyceride is an integer selected from x+2 to x+12 under a condition satisfying y≤22. The y number of carbon atoms is an integer selected from a condition preferably satisfying y = x+2 to x+10, more preferably satisfying y = x+4 to x+8. Moreover, the upper limit value of the y number of carbon atoms is preferably y≤20, more preferably y≤18. The fat and/or oil composition of the present invention may contain multiple, for example, two types to five types, preferably three or four types, of the X2Y triglycerides. In such cases, the definition of each of the X2Y triglycerides is as described above. The y number of carbon atoms of the fatty acid residue Y of each X2Y triglyceride is selected within the above-described range independently from the other X2Y triglyceride. For example, in a case where the fat and/or oil composition of the present invention is produced by interesterifying tricaprin and a highly hydrogenated oil of palm kernel stearin, the composition contains four types of the X2Y triglycerides in which all the x's satisfy x = 10, while y's satisfy y = 12, 14, 16, and 18, respectively.

The fatty acid residue Y may be a saturated or unsaturated fatty acid residue. Specific examples of the fatty acid residue Y include residues such as lauric acid, myristic acid, palmitic acid, stearic acid, arachidic acid, and behenic acid, but are not limited thereto. The fatty acid is more preferably myristic acid, palmitic acid, stearic acid, arachidic acid, and behenic acid, and furthermore preferably myristic acid, palmitic acid, and stearic acid.

The fatty acid residue Y of the X2Y triglyceride may be located at any one of positions 1 to 3 thereof.

The content of the X2Y triglycerides is 35 to 1% by mass relative to 100% by mass of all the triglycerides in the fat and/or oil composition. The content of the X2Y triglycerides is, for example, 25 to 1% by mass, preferably 20 to 1% by mass, more preferably 17 to 1% by mass, furthermore preferably 15 to 2% by mass, and still furthermore preferably 10 to 2% by mass. In the case where the fat and/or oil composition of the present invention contains multiple X2Y triglycerides, the amount of the X2Y triglycerides is a total amount of the X2Y triglycerides contained.

<Other Triglycerides>

The fat and/or oil composition of the present invention may contain other triglycerides than the above-described XXX triglyceride and X2Y triglycerides, as long as the effects of the present invention are not impaired. The other triglycerides may be multiple types of triglycerides, or may be synthetic fats and/or oils or natural fats and/or oils. The synthetic fats and/or oils include glyceryl tricaprylate, glyceryl tricaprate, and the like. Examples of the natural fats and/or oils include cocoa butter, sunflower seed oil, rapeseed oil, soybean oil, cottonseed oil, and the like. The other triglycerides may be contained in an amount of 1% by mass or more, for example, approximately 5 to 30% by mass, relative to 100% by mass of all the triglycerides in the fat and/or oil composition of the present invention without problems. The content of the other triglycerides is, for example, 0 to 30% by mass, preferably 0 to 18% by mass, more preferably 0 to 15% by mass, and furthermore preferably 0 to 8% by mass.

<Other Ingredients>

The fat and/or oil composition of the present invention may optionally contain ingredients, such as an emulsifier, a flavoring, a skim milk powder, a whole milk powder, a cocoa powder, sugar, and dextrin, other than the above-described triglycerides. The amount of these other ingredients can be any amount, as long as the effects of the present invention are not impaired. For example, the amount is 0 to 70% by mass, preferably 0 to 65% by mass, and more preferably 0 to 30% by mass, provided that a total mass of the fat and/or oil composition is 100% by mass, for example. Preferably, 90% by mass or more of the other ingredients are a powder having an average particle diameter of 1000 µm or less, and more preferably a powder having an average particle diameter of 500 µm or less. Note that the term average particle diameter herein is a value measured according to laser diffraction/scattering methods (ISO133201 and ISO9276-1).

However, a preferable fat and/or oil composition of the present invention is preferably substantially constituted only of a fat and/or oil. Herein, the fat and/or oil is substantially constituted only of triglycerides. Moreover, the term "substantially" means that the content of an ingredient(s) other than the fat and/or oil incorporated in the fat and/or oil composition or of an ingredient (s) other than the triglycerides incorporated in the fat and/or oil is, for example, 0 to 15% by mass, preferably 0 to 10% by mass, and more preferably 0 to 5% by mass, relative to 100% by mass of the fat and/or oil composition or the fat and/or oil.

<Powdered Fat and/or Oil Composition>

The powdered fat and/or oil composition of the present invention can be obtained by melting the triglycerides incorporated in the above-described fat and/or oil composition to obtain the fat and/or oil composition in a molten state, and cooling this fat and/or oil composition, so that a fat and/or oil composition in a powder form (powdered fat and/or oil composition) is obtained without adopting special processing means such as spraying and mechanical pulverization with a pulverizer such as a mill. More specifically, the fat and/or oil composition containing the XXX triglyceride and the X2Y triglycerides is optionally heated and melted, and a fat and/or oil composition in a molten state thus obtained is then cooled to form a solid having voids with a larger volume than the fat and/or oil composition in the molten state. The obtained solid is pulverized (loosened) by adding a light impact from the outside, for example, by sieving. In this manner, a powdered fat and/or oil composition can be obtained easily.

<Physical Properties of Powdered Fat and/or Oil Composition>

The powdered fat and/or oil composition of the present invention is a powdered solid at room temperature (20°C).

The powdered fat and/or oil composition of the present invention, for example, if substantially constituted only of a fat and/or oil, has a loose bulk density of 0.1 to 0.6 g/cm$^3$, preferably 0.15 to 0.5 g/cm$^3$, and more preferably 0.2 to 0.4 g/cm$^3$. Herein, a "loose bulk density" refers to a packing density determined by letting a powder naturally fall. A loose bulk density (g/cm$^3$) is measured, for example, by: letting an appropriate amount of a powdered fat and/or oil composition fall approximately 2 cm above an upper opening end of a graduated cylinder with an inner diameter 15 mm $\times$ 25 mL to loosely fill the graduated cylinder; measuring a mass (g) and reading a volume (mL) thus filled; and calculating a mass (g) of the powdered fat and/or oil composition per mL to determine the loose bulk density. Alternatively, a loose bulk density can also be calculated from a bulk specific gravity measured based on JIS K-6720 (or ISO 1060-1 and 2) by using a bulk specific gravity measuring device manufactured by Kuramochi Kagaku Kikai Seisakusho Co. Specifically, 120 mL of a sample is let fall toward a receiver (a 100-mL cylindrical container with an inner diameter of 40 mm $\times$ a height of 85 mm) from a height position 38 mm above an upper opening of the receiver. The sample protruding from the receiver is slid off, and a mass (A g) of the sample corresponding to the internal capacity (100 mL) of the receiver is weighed, so that a loose bulk density can be determined from the following formula.

$$\texttt{Loose bulk density (g/mL) = A (g)/100 (mL)}$$

The measurement is preferably performed three times to obtain the average.

<Method for Producing Powdered Fat and/or Oil Composition>

The powdered fat and/or oil composition of the present invention can be produced by a method including the following steps of:

(a) preparing a fat and/or oil composition containing 65 to 99% by mass of a XXX triglyceride having fatty acid residues X, each with x carbon atoms, at positions 1 to 3, and 35 to 1% by mass of X2Y triglycerides each having a fatty acid residue Y with y carbon atoms in place of one of the fatty acid residues X of the XXX triglyceride, provided that a total triglyceride content is 100% by mass, where x number of carbon atoms is an integer selected from 8 to 20, and y number of carbon atoms is each independently an integer selected from x+2 to x+12 and satisfying y≤22;
(b) optionally heating the fat and/or oil composition to melt the triglycerides incorporated in the fat and/or oil composition, thereby obtaining the fat and/or oil composition in the molten state; and
(d) cooling the fat and/or oil composition in the molten state to obtain a powdered fat and/or oil composition.

Additionally, the method may include, as step (c), an optional step(s) for promoting the powder formation, for example, a seeding step (c1), a tempering step (c2), and/or a pre-cooling step (c3), between steps (b) and (d). Further, the powdered fat and/or oil composition obtained in step (d) may be a fat and/or oil composition in a powder form obtained by step (e) of pulverizing a solid obtained after the cooling in step (d).

(a) Fat and/or Oil Composition Preparation Step I

The fat and/or oil composition prepared in step (a) contains a XXX triglyceride (at least one type) and a X2Y triglyceride (at least one type) in the above-described % by mass. Specifically, for example, the fat and/or oil composition is obtained through steps of: separately preparing and mixing a XXX triglyceride (at least one type) having fatty acid residues X, each with x carbon atoms, at positions 1 to 3 and a YYY triglyceride (at least one type) having fatty acid residues Y, each with y carbon atoms, at positions 1 to 3 at a mass ratio of XXX triglyceride/YYY triglyceride being 90/10 to 99/1 to obtain a reaction substrate (herein, x number of carbon atoms is an integer selected from 8 to 20, and y number of carbon atoms is an integer selected from x+2 to x+12 and satisfying $y \leq 22$); and heating the reaction substrate, followed by an interesterification in the presence of a catalyst.

(a) Fat and/or Oil Composition Preparation Step II

The method for producing the fat and/or oil composition prepared in step (a) of the present invention further includes a method in which a XXX triglyceride and a X2Y triglyceride are simultaneously and directly synthesized as described below. Specifically, to obtain a XXX triglyceride and a X2Y triglyceride in this preparation step II, a XXX triglyceride and a YYY triglyceride are not separately synthesized for the interesterification, but raw materials (fatty acids or fatty acid derivatives and glycerin) for producing both of the triglycerides are introduced into, for example, a single reaction vessel to simultaneously and directly synthesize the triglycerides.

(a) Fat and/or Oil Composition Preparation Step III

Further, the fat and/or oil composition may be obtained as the fat and/or oil composition containing 65 to 99% by mass of the XXX triglyceride and 35 to 1% by mass of the X2Y triglyceride by: preparing a fat and/or oil composition containing the XXX triglyceride outside the range of 65 to 99% by mass and/or the X2Y triglyceride outside the range of 35 to 1% by mass; and then further adding the XXX triglyceride or the X2Y triglyceride (preparation of the fat and/or oil composition by dilution). For example, after a fat and/or oil composition containing 50 to 70% by mass of the XXX triglyceride and 50 to 30% by mass of the X2Y triglyceride is obtained, a desired amount of the XXX triglyceride may be added to obtain the fat and/or oil composition containing 65 to 99% by mass of the XXX triglyceride and 35 to 1% by mass of the X2Y triglyceride.

(b) Step of obtaining the Fat and/or Oil Composition in Molten State

Before step (d), if the fat and/or oil composition obtained in step (a) is in a molten state when prepared, the fat and/or oil composition is directly cooled without heating. Meanwhile, if the fat and/or oil composition is not in a molten state when obtained, the fat and/or oil composition is optionally heated to melt the triglycerides incorporated in the fat and/or oil composition, so that the fat and/or oil composition in the molten state is obtained.
Herein, it is appropriate to heat the fat and/or oil composition at a temperature not lower than melting points of the triglycerides incorporated in the fat and/or oil composition, particularly at a temperature at which the XXX triglyceride and the X2Y triglyceride can be melted, for example, 70 to 200°C, preferably 75 to 150°C, and more preferably 80 to 100°C. Moreover, it is appropriate to continue the heating for, for example, 0.5 to 3 hours, preferably 0. 5 to 2 hours, and more preferably 0.5 to 1 hour.

(d) Step of Cooling Fat and/or Oil Composition in Molten State to Obtain Powdered Fat and/or Oil Composition

Further, the fat and/or oil composition in the molten state obtained in step (a) or (b) is cooled to form a powdered fat and/or oil composition.
Herein, "cooling the fat and/or oil composition in the molten state" and similar phrases mean keeping the fat and/or oil composition in the molten state at a temperature lower than the melting point of the fat and/or oil composition. The "temperature lower than the melting point of the fat and/or oil composition" is, for example, a temperature lower by 1 to 30°C than the melting point, preferably a temperature lower by 1 to 20°C than the melting point, and more preferably a temperature lower by 1 to 15 °C than the melting point. The cooling of the fat and/or oil composition in the molten state is performed, for example, when x is 8 to 10, such that the cooling makes the final temperature reach a temperature of preferably 10 to 30°C, more preferably 15 to 25°C, and furthermore preferably 18 to 22°C. The final temperature in the cooling is, for example, when x is 11 or 12, preferably 30 to 40°C, more preferably 32 to 38°C, and furthermore preferably 33 to 37°C; when x is 13 or 14, preferably 40 to 50°C, more preferably 42 to 48°C, and furthermore preferably 44 to 47°C; when x is 15 or 16, preferably 50 to 60°C, more preferably 52 to 58°C, and furthermore preferably 54 to 57°C; when x is 17 or 18, preferably 60 to 70°C, more preferably 62 to 68°C, and furthermore preferably 64 to 67°C; when x is 19 or 20, preferably 70 to 80°C, more preferably 72 to 78°C, and furthermore preferably 74 to 77°C. At the above-described final temperatures, it is appropriate to leave standing the fat and/or oil composition in the molten state for, for example, preferably 2 hours or longer, more preferably 4 hours or longer, and furthermore preferably 6 hours to 2 days. In some cases, for example, if it takes time for powdering relatively as in a case where x number of carbon atoms of the fatty acid residues X of the XXX triglyceride is 8 to 12, particularly in a case where the following step (c) is not adopted, the fat and/or oil composition in the molten state may have to be left standing for, for example, 2 to 8 days, specifically 3 to 7 days, and more specifically approximately 6 days.

(c) Step of Promoting Powder Formation

Further, as the optional step (c) for promoting the powder formation between steps (a) or (b) and (d), the fat and/or oil composition in the molten state to be used in step (d) may be treated by a seeding process (c1), a tempering process (c2), and/or a pre-cooling process (c3).

Herein, the seeding process is a method for promoting powdering by adding a small amount of an ingredient, which serves as a powder core (seed), during the cooling of the fat and/or oil composition in the molten state. Specifically, for example, targeting the fat and/or oil composition in the molten state obtained in step (b), a fat and/or oil powder containing preferably 80% by mass or more, more preferably 90% by mass or more, of a XXX triglyceride with the same number of carbon atoms as the XXX triglyceride in the fat and/or oil composition is prepared as the ingredient which serves as the core (seed). This fat and/or oil powder serving as the core is added in an amount of 0.1 to 1 part by mass, preferably 0.2 to 0.8 parts by mass, to 100 parts by mass of the fat and/or oil composition in the molten state when the temperature of the fat and/or oil composition reaches a temperature of, for example, the final cooling temperature $\pm 0$ to +10°C, preferably +5 to +10°C, during the cooling of the fat and/or oil composition in the molten state. In this manner, this method promotes powdering of the fat and/or oil composition.

The tempering process is a method for promoting powdering of the fat and/or oil composition by one-time cooling before the fat and/or oil composition in the molten state is left standing at the final cooling temperature in cooling the fat and/or oil composition. In this process, the fat and/or oil composition in the molten state is cooled to a temperature lower than the cooling temperature in step (d), for example, a temperature lower by 5 to 20 °C, preferably a temperature lower by 7 to 15°C, and more preferably a temperature lower by approximately 10°C, for preferably 10 to 120 minutes, more preferably approximately 30 to 90 minutes.

The pre-cooling process (c3) is a method for temporarily pre-cooling, before the cooling in step (d), the fat and/or oil composition in the molten state obtained in step (a) or (b) at a temperature lower than the temperature for the molten state in step (a) or (b) but higher than the cooling temperature in step (d). The temperature higher than the cooling temperature in step (d) may be, for example, a temperature higher by 2 to 40°C than the cooling temperature in step (d), preferably a temperature higher by 3 to 30°C, more preferably a temperature higher by 4 to 30°C, and furthermore preferably a temperature higher by approximately 5 to 10°C. Setting a lower temperature for the pre-cooling makes it possible to further shorten the cooling time at the cooling temperature in step (d). Thus, unlike the seeding process and the tempering process, the pre-cooling process is a method for allowing the promotion of powdering of the fat and/or oil composition only by decreasing the cooling temperature stepwise, and has a great advantage in industrial production.

(e) Step of Pulverizing Solid to Obtain Powdered Fat and/or Oil Composition

Step (d) of obtaining the powdered fat and/or oil composition by cooling described above may be performed, more specifically, by step (e) of pulverizing a solid resulting from the cooling in step (d) to obtain a powdered fat and/or oil composition.

The detail will be described. First, the fat and/or oil composition containing the XXX triglyceride and the X2Y triglyceride is melted, and a fat and/or oil composition is thus obtained in a molten state and then cooled to form a solid having voids with a larger volume than the fat and/or oil composition in the molten state. The fat and/or oil composition in the form of solid having voids can be pulverized by adding a light impact, so that the solid easily collapses into a powder form.

Herein, the means for adding a light impact is not particularly specified. For example, a pulverization (loosening) method by gently vibrating (applying an impact to) the solid by shaking, sieving, or the like is simple and preferable.

<Other Ingredients Incorporated in Powdered Fat and/or Oil Composition>

The powdered fat and/or oil composition of the present invention may optionally contain other ingredients such as an emulsifier, a protein, a starch, and an antioxidant. For example, adding an ingredient having an emulsification action to the powdered fat and/or oil composition makes it possible to enhance the dispersibility of the powdered fat and/or oil composition into an aqueous system. The amount of these other ingredients can be any amount, as long as the effects of the present invention are not impaired. For example, the amount is 0 to 70% by mass, preferably 0 to 65% by mass, and more preferably 0 to 30% by mass, provided that a total mass of the powdered fat and/or oil composition is 100% by mass, for example.

However, a preferable powdered fat and/or oil composition of the present invention is preferably substantially constituted only of a fat and/or oil. Herein, the fat and/or oil is substantially constituted only of triglycerides. Moreover, the term "substantially" means that the content of an ingredient (s) other than the fat and/or oil incorporated in the powdered fat and/or oil composition or of an ingredient (s) other than the triglycerides incorporated in the fat and/or oil is, for example, 0 to 15% by mass, preferably 0 to 10% by mass, and more preferably 0 to 5% by mass, relative to 100% by mass of the fat and/or oil composition or the fat and/or oil.

<Content of Powdered Fat and/or Oil Composition>

The powdered fat and/or oil composition of the present invention is incorporated in a chocolate such that a ratio of the mass of the powdered fat and/or oil composition to the mass of cocoa butter is 40:60 to 99:1. The ratio of the mass of the powdered fat and/or oil composition to the mass of the cocoa butter is more preferably 45:55 to 97:3, and furthermore preferably 50:50 to 95:5. Meanwhile, the powdered fat and/or oil composition of the present invention is preferably incorporated such that the content in the chocolate is 10% by mass to 60% by mass relative to 100% by mass of a finally obtained chocolate. Moreover, the content is preferably 12 to 55% by mass, and furthermore preferably 15 to 50% by mass.

For example, in the case where the ratio of the mass of the powdered fat and/or oil composition to the mass of the cocoa butter is 40:60 (i.e., in a case where the ratio of the cocoa butter to the powdered fat and/or oil composition is high), the chocolate comes to have a light air-in-like mouthfeel and a good melt-in-the-mouth some time after the solidification. In contrast, in the case where the ratio of the mass of the powdered fat and/or oil composition to the mass of the cocoa butter is 99:1 (in a case where the ratio of the cocoa butter to the powdered fat and/or oil composition is low), the chocolate comes to have a light air-in-like mouthfeel and a good melt-in-the-mouth immediately after the solidification. In this manner, the time to become the air-in-like state varies depending on the ratio of the cocoa butter to the powdered fat and/or oil composition. Thus, the mass ratio as described above is preferable. Note that since the powdered fat and/or oil composition melts during the chocolate production process, it is also possible to add the fat and/or oil composition in the molten state in place of the powdered fat and/or oil composition. The content of that fat and/or oil composition is as defined for the powdered fat and/or oil composition.

<Edible Fat and/or Oil Incorporated in Chocolate>

The chocolate of the present invention can optionally contain an edible fat and/or oil in addition to the powdered fat and/or oil composition. Such an edible fat and/or oil include edible oils, margarines, fat spreads, shortenings, and the like. One or a combination of at least two of these can be used. As raw materials of the edible fats and/or oils, it is possible to use, for example, coconut oil, palm kernel oil, palm oil, palm fractionated oil (such as palm olein or palm super olein), shea butter, fractionated shea butter, sal fat, fractioned sal fat, illipe butter, soybean oil, rapeseed oil, cottonseed oil, safflower oil, sunflower seed oil, rice oil, corn oil, sesame oil, olive oil, milk fat, cocoa butter, or the like, a fat and/or oil mixture thereof, a processed fat and/or oil thereof, or the like. The amount of these edible fats and/or oils can be any amount, as long as the effects of the present invention are not impaired. Nevertheless, the amount is 0 to 100% by mass, preferably 0 to 75% by mass, and more preferably 0 to 50% by mass, relative to 100% by mass of the total mass of the powdered fat and/or oil composition, for example.

Herein, the content of the fat and/or oil incorporated in the chocolate of the present invention also includes the content of fats and/or oils (cocoa butter, milk fat) derived from oil-containing raw materials (such as cacao mass, cocoa butter, a whole milk powder) of the chocolate, other than the content of the fat and/or oil to be blended. For example, generally, the fat and/or oil (cocoa butter) content in cacao mass is 55% by mass, the fat and/or oil (cocoa butter) content in a cocoa powder is 11% by mass, and the fat and/or oil (milk fat) content in a whole milk powder is 25% by mass. Hence, in the present invention, the content of the fat and/or oil in the chocolate refers to a total value including the content of the fat and/or oil derived from such an oil-containing raw material(s) of the chocolate.

<Saccharide Incorporated in Chocolate>

The chocolate of the present invention preferably contains a saccharide other than the fat and/or oil. As the saccharide, it is possible to use, for example, sucrose (sugar, powdered sugar), lactose, glucose, fructose, maltose, a hydrogenated starch saccharide, liquid sugar, enzyme-inverted syrup, isomerized liquid sugar, sucrose-coupled syrup, reducing sugar polydextrose, an oligosaccharide, sorbitol, reduced lactose, trehalose, xylose, xylitose, maltitol, erythritol, mannitol, raffinose, dextrin, or the like. The content of the saccharide incorporated in the chocolate of the present invention is preferably 20 to 60% by mass, more preferably 25 to 55% by mass, and furthermore preferably 30 to 50% by mass, provided that a total mass of the chocolate is 100% by mass.

<Other Ingredients Incorporated in Chocolate>

In the chocolate of the present invention, raw materials, which are generally blended in producing chocolates, can be used other than the fat and/or oil and the saccharide. Specifically, it is possible to use, for example, a dairy product such as a whole milk powder or a skim milk powder, a cacao ingredient such as cacao mass or a cocoa powder, a soybean flour, a soybean protein, a processed fruit product, a processed vegetable product, various powders such as a matcha powder or a coffee powder, a gum, a starch, an antioxidant, a coloring agent, a flavoring, an emulsifier, or the like.

<Method for Producing Chocolate>

The chocolate of the present invention can be produced by conventionally known methods. The chocolate of the present invention can be produced, for example, by first melting the powdered fat and/or oil composition and adding the resultant as a fat and/or oil composition in a molten state, or directly adding the powdered fat and/or oil composition, to raw materials such as a fat and/or oil, a cacao ingredient, a saccharide, a dairy product, and an emulsifier such that the final fat and/or oil content in the chocolate is 25 to 65% by mass, and through a mixing step, a refining step (refining), a conching step (conching), a cooling step, and so forth. Particularly, since the chocolate of the present invention is cooled and solidified without tempering, the tempering process is not necessary. Note that normal chocolates are preferably subjected to the tempering process.

<Chocolate Quality Improver>

By the ways, as has been described above, the powdered fat and/or oil composition used in the present invention improves conventional chocolates so that the chocolates can have a light air-in-like mouthfeel and a good melt-in-the-mouth. Thus, the present invention also relates to a chocolate quality improver containing the powdered fat and/or oil composition as an active ingredient. As described below, blending the chocolate quality improver of the present invention into raw materials of conventional chocolates makes it possible to bring about the effects of improving the quality such that the chocolates are altered to have a light air-in-like mouthfeel and a good melt-in-the-mouth.
The chocolate quality improver of the present invention contains the above-described powdered fat and/or oil composition. In order to exhibit the effect in a small amount, the chocolate quality improver of the present invention contains preferably 60% by mass or more, more preferably 80% by mass or more, and furthermore preferably 100% by mass or more of the powdered fat and/or oil composition.
Moreover, it is only necessary that the chocolate quality improver of the present invention contain the above-described powdered fat and/or oil composition as an active ingredient. Besides, the chocolate quality improver may contain other ingredients such as a fat and/or oil such as soybean oil or rapeseed oil, an excipient such as dextrin or starch, and a quality improver, within such ranges that the effects of the present invention are not impaired.
However, a preferable chocolate quality improver of the present invention is preferably substantially constituted only of the powdered fat and/or oil composition. Moreover, the term "substantially" means that the content of an ingredient(s) other than the powdered fat and/or oil composition incorporated in the chocolate quality improver is, for example, 0 to 15% by mass, preferably 0 to 10% by mass, and more preferably 0 to 5% by mass, relative to 100% by mass of the chocolate quality improver.

[Examples]

Next, the present invention will be described in further details based on Examples and Comparative Example. However, the present invention is not limited to these at all. Moreover, in the following description, "%" means % by mass, unless otherwise noted.

<Raw Material Fat and/or Oil>

(1) Powdered fat and/or oil composition (melting point: approximately 28°C):

[x = 10, y = 18, tempering process]

Into a 500-mL four-necked flask equipped with a stirrer, a thermometer, a nitrogen gas inlet tube, and a water separator, 44.1 g (0.479 mol) of glycerin (manufactured by Sakamoto Yakuhin Kogyo Co., Ltd.), 25.9 g (0.091 mol) of stearic acid (Palmac 98-18 (manufactured by Acidchem International Sdn Bhd)), and 266.0 g (1.544 mol) of capric acid (Palmac 99-10 (manufactured by Acidchem International Sdn Bhd)) were placed. These were reacted under a nitrogen stream at a temperature of 250°C for 15 hours. Excessive capric acid was distilled off at 190°C under a reduced pressure, followed by bleaching, filtration, and deodorization. Thus, 245 g of a pale yellow liquid reaction product at 50°C was obtained (XXX type: 80.6% by mass, X2Y type: 17.3% by mass). Raw material fats (XXX type: 94.0% by mass, X2Y type: 5.2% by mass) were prepared by mixing 60 g of the obtained reaction product with 140 g of tricaprin (manufactured by The Nisshin OilliO Group, Ltd.). The raw material fats were maintained at 80°C for 0.5 hours and completely melted. The resultant was cooled in a thermostatic chamber at 10°C for 1 hour, and then left standing in the thermostatic chamber at 20 °C for 12 hours. A solid having voids with an increased volume was formed and then loosened. Thus, a powdered crystalline composition was obtained (loose bulk density: 0.3 g/cm$^3$, average particle diameter of 116 $\mu$m). The powdered fat and/or oil composition thus obtained was used in the following Examples.

Here, the loose bulk density was calculated from a bulk specific gravity measured based on JIS K-6720 (or ISO 1060-1 and 2) by using a bulk specific gravity measuring device manufactured by Kuramochi Kagaku Kikai Seisakusho Co. Specifically, 120 mL of the sample was let fall toward a receiver (a 100-mL cylindrical container with an inner diameter of 40 mm $\times$ a height of 85 mm) from a height position 38 mm above an upper opening of the receiver. Subsequently, the sample protruding from the receiver was slid off, and the mass (A g) of the sample corresponding to the internal capacity (100 mL) of the receiver was weighed. The loose bulk density was determined from the following formula.

$$\texttt{Loose bulk density (g/mL) = A (g)/100 (mL)}$$

The measurement was repeated three times to obtain the average as the measurement value.
Here, the average particle diameter was measured based on laser diffraction/scattering methods (ISO133201, ISO9276-1) using Microtrac MT3300ExII manufactured by Nikkiso Co., Ltd.).

<Other Raw Materials>

Cocoa butter (manufactured by Daito Cacao Co., Ltd.), lecithin (manufactured by The Nisshin OilliO Group, Ltd.), a vanilla flavor (manufactured by Givaudan S.A.), cacao mass (manufactured by Daito Cacao Co., Ltd.), a cocoa powder (manufactured by Daito Cacao Co., Ltd.), and sugar (manufactured by Tokukura Corporation) used in Examples were all commercially available.

[Example 1]

<Production of Chocolate>

According to the formulas in Table 1 below, chocolates of Examples 1 and 2 and Comparative Example 1 were produced by cooling and solidification through a mixing process, a refining process, and a conching process according to ordinary methods. In more details, raw materials (such as cacao mass, cocoa butter) were uniformly mixed with a mixer (universal mixing stirrer 8XDML: manufactured by DALTON Corporation) by heating to 60°C for approximately 5 minutes. Thus a chocolate mix was obtained. The obtained chocolate mix was ground and refined with a roll refiner (SDY hydraulic three-roll mill: manufactured by BUHLER AG) to an average particle size of approximately 20 $\mu$m. The refined chocolate mix was kneaded using the mixer for 20 minutes or longer. After the liquefaction, the oil content was adjusted to prepare a liquid raw chocolate. The temperature was adjusted to 30°C, and the liquid raw chocolate was poured into a mold and molded. Then, the liquid raw chocolate was cooled and solidified at 10 to 20 °C. Example 1 was prepared such that the ratio of the mass of the powdered fat and/or oil composition to the mass of the cocoa butter was 50:50, and Example 2 was prepared such that the ratio of the mass of the powdered fat and/or oil composition to the mass of the cocoa butter was 95:5. Meanwhile, Comparative Example 1 was produced by using not the powdered fat and/or oil composition but normal cocoa butter.

Note that the cacao mass contained 55% by mass of cocoa butter. Moreover, the cocoa powder contained 11% by mass of cocoa butter. Hence, the cocoa butter content in Example 1 was 2.0 + 360.0 × 0.55 = 200.0 (g). The cocoa butter content in Example 2 was 181.8 × 0.11 = approximately 20.0 (g).

[Table 1] Chocolate formula and evaluation

| | Example 1 | | Example 2 | | Comparative Example 1 | |
|---|---|---|---|---|---|---|
| Blended raw materials | (g) | (%) | (g) | (%) | (g) | (%) |
| Cocoa butter | 2.0 | 0.2 | - | - | 202.0 | 20.2 |
| Powdered fat and/or oil composition | 200.0 | 20.0 | 380.0 | 38.0 | - | - |
| Lecithin | 5.0 | 0.5 | 5.0 | 0.5 | 5.0 | 0.5 |
| Vanilla flavor | 0.5 | 0.05 | 0.5 | 0.05 | 0.5 | 0.05 |
| Cacao mass | 360.0 | 36.0 | - | - | 360.0 | 36.0 |
| Cocoa powder | - | - | 181.8 | 18.18 | - | - |
| Sugar | 432.5 | 43.25 | 432.7 | 43.27 | 432.5 | 43.25 |
| Raw material total | 1000.0 | 100.0 | 1000.0 | 100.0 | 1000.0 | 100.0 |
| Evaluation results | | | | | | |
| Mouthfeel | ○ | | ○ | | × | |
| Melt-in-the-mouth | ○ | | ○ | | × | |

<Evaluation of Chocolate>

The chocolates of Examples 1 and 2 and Comparative Example 1 produced above were evaluated according to the following evaluation methods.

<Chocolate Evaluation Methods>

(1) Mouthfeel evaluation method

A comprehensive evaluation was conducted by five skilled panelists according to the following criteria.

○: having a light air-in-like mouthfeel
Δ: slightly having a light air-in-like mouthfeel
×: having no light air-in-like mouthfeel

(2) Melt-in-the-mouth evaluation method

A comprehensive evaluation was conducted by five skilled panelists according to the following criteria

○: having a smooth and good melt-in-the-mouth and a cooling sensation
Δ: slight lacking a light mouthfeel, a smooth and good melt-in-the-mouth, and a cooling sensation
×: having no light mouthfeel, no smooth and good melt-in-the-mouth, and no cooling sensation

As apparent from the result of Table 1, it was found out that the chocolates (Examples 1 and 2) produced by using the powdered fat and/or oil composition of the present invention each had a light air-in-like mouthfeel and a smooth and good melt-in-the-mouth, felt like what is called an aerated chocolate, and were highly preferable chocolates. On the other hand, the chocolate (Comparative Example 1) produced without using the powdered fat and/or oil composition of the present invention had neither a light air-in-like mouthfeel nor a smooth melt-in-the-mouth. Meanwhile, the chocolates (Examples 1 and 2) produced by using the powdered fat and/or oil composition of the present invention had unique cooling sensations and were highly preferable chocolates. On the other hand, the chocolate produced without using the powdered fat and/or oil composition of the present invention did not have such a cooling sensation.

The present invention does not have to use dedicated equipment unlike conventional methods for producing aerated chocolates, and makes it possible to obtain an air-in-like chocolate by blending the powdered fat and/or oil composition of the present invention and simply cooling and solidifying the blend. This suggests a possibility of greatly simplifying existing aerated-chocolate production steps, and the industrial applicability is quite high.

**Claims**

1. A powdered fat and/or oil composition for chocolate, comprising a fat and/or oil composition in a powder form satisfying the following condition (a), wherein

    (a) the fat and/or oil composition comprises:

        65 to 99% by mass of a XXX triglyceride having fatty acid residues X, each with x carbon atoms, at positions 1 to 3; and
        35 to 1% by mass of one or more types of X2Y triglycerides each having a fatty acid residue Y with y carbon atoms in place of one of the fatty acid residues X of the XXX triglyceride, provided that a total triglyceride content is 100% by mass,

    x number of carbon atoms is an integer selected from 8 to 20, and
    y number of carbon atoms is each independently an integer selected from x+2 to x+12 and satisfying y≤22.

2. The powdered fat and/or oil composition according to claim 1, comprising:

        80 to 99% by mass of the XXX triglyceride; and
        20 to 1% by mass of the one or more types of X2Y triglycerides in total.

3. The powdered fat and/or oil composition according to claim 1 or 2, wherein
    the x is an integer selected from 10 to 18, and
    the y is each independently an integer selected from x+2 to x+10 and satisfying y≤22.

4. The powdered fat and/or oil composition according to any one of claims 1 to 3, wherein
    the x is an integer selected from 10 to 12, and
    the y is each independently an integer selected from x+4 to x+8 and satisfying y≤22.

5. The powdered fat and/or oil composition according to any one of claims 1 to 4, which has a loose bulk density of 0.1 to 0.6 g/cm$^3$.

6. A chocolate comprising the powdered fat and/or oil composition according to any one of claims 1 to 5.

7. The chocolate according to claim 6, comprising the powdered fat and/or oil composition and cocoa butter at a mass ratio of 40:60 to 99:1, more preferably 45:55 to 97:3, and furthermore preferably 50:50 to 95:5.

8. A method for producing a chocolate, comprising blending the powdered fat and/or oil composition according to any one of claims 1 to 5.

9. The method for producing a chocolate according to claim 8, comprising blending the powdered fat and/or oil composition and cocoa butter at amass ratio of 40 : 60 to 99:1, more preferably 45:55 to 97:3, and furthermore preferably 50:50 to 95:5.

10. A chocolate quality improver comprising the powdered fat and/or oil composition according to any one of claims 1 to 5 as an active ingredient.

11. A fat and/or oil composition for chocolate, comprising a fat and/or oil composition in a molten state satisfying the following condition (a), wherein

    (a) the fat and/or oil composition comprises:

65 to 99% by mass of a XXX triglyceride having fatty acid residues X, each with x carbon atoms, at positions 1 to 3; and
35 to 1% by mass of one or more types of X2Y triglycerides each having a fatty acid residue Y with y carbon atoms in place of one of the fatty acid residues X of the XXX triglyceride, provided that a total triglyceride content is 100% by mass,

x number of carbon atoms is an integer selected from 8 to 20, and
y number of carbon atoms is each independently an integer selected from x+2 to x+12 and satisfying y≤22.

## INTERNATIONAL SEARCH REPORT

International application No.

PCT/JP2016/055420

**A. CLASSIFICATION OF SUBJECT MATTER**
*A23D9/00(2006.01)i, A23G1/00(2006.01)i, A23G1/30(2006.01)i*

According to International Patent Classification (IPC) or to both national classification and IPC

**B. FIELDS SEARCHED**

Minimum documentation searched (classification system followed by classification symbols)
A23D9/00, A23G1/00, A23G1/30

Documentation searched other than minimum documentation to the extent that such documents are included in the fields searched
Jitsuyo Shinan Koho          1922–1996   Jitsuyo Shinan Toroku Koho   1996–2016
Kokai Jitsuyo Shinan Koho    1971–2016   Toroku Jitsuyo Shinan Koho   1994–2016

Electronic data base consulted during the international search (name of data base and, where practicable, search terms used)
JSTPlus/JMEDPlus/JST7580(JDreamIII),
CAplus/REGISTRY/MEDLINE/EMBASE/BIOSIS(STN)

**C. DOCUMENTS CONSIDERED TO BE RELEVANT**

| Category* | Citation of document, with indication, where appropriate, of the relevant passages | Relevant to claim No. |
|---|---|---|
| A | WO 2014/087724 A1 (Fuji Oil Co., Ltd.), 12 June 2014 (12.06.2014), claims & JP 5601432 B | 1-11 |
| A | JP 2012-249617 A (The Nisshin Oillio Group, Ltd.), 20 December 2012 (20.12.2012), claims (Family: none) | 1-11 |
| A | US 3796816 A (HASMAN, John Michael), 12 March 1974 (12.03.1974), claims (Family: none) | 1-11 |

☒ Further documents are listed in the continuation of Box C.    ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 08 April 2016 (08.04.16) | 10 May 2016 (10.05.16) |

| Name and mailing address of the ISA/ Japan Patent Office 3-4-3,Kasumigaseki,Chiyoda-ku, Tokyo 100-8915,Japan | Authorized officer Telephone No. |
|---|---|

Form PCT/ISA/210 (second sheet) (January 2015)

15

**INTERNATIONAL SEARCH REPORT**

International application No.

PCT/JP2016/055420

C (Continuation).    DOCUMENTS CONSIDERED TO BE RELEVANT

| Category* | Citation of document, with indication, where appropriate, of the relevant passages | Relevant to claim No. |
|---|---|---|
| P,X | WO 2016/013582 A1  (The Nisshin Oillio Group, Ltd.), 28 January 2016 (28.01.2016), claims (Family: none) | 1-11 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005073610 A
- JP 2007236289 A
- JP 2012249617 A
- JP 2014124093 A
- JP 2015070850 W
- JP 2014149168 A